# EUROPÄISCHE PATENTSCHRIFT

(11) **EP 3 041 730 B1**
(45) Veröffentlichungstag und Bekanntmachung des Hinweises auf die Patenterteilung: **04.10.2017**
(21) Anmeldenummer: 14755617.9
(22) Anmeldetag: 12.08.2014
(51) Int. Cl.: B62D 29/00, B62D 27/02

(54) **ALUMINIUMDRUCKGUSSTEIL**
ALUMINIUM DIE-CAST PART
PIÈCE EN ALUMINIUM COULÉE SOUS PRESSION

(30) Priorität: 05.09.2013 DE 102013217700
(43) Veröffentlichungstag der Anmeldung: 13.07.2016
(73) Patentinhaber: Bayerische Motoren Werke Aktiengesellschaft, 80809 München (DE)
(72) Erfinder: ANASENZL, Manuel, 84048 Mainburg (DE); KLINKENBERG, Franz-Josef, 84030 Ergolding (DE); SEGAUD, Jean-Marc, 84034 Landshut (DE)
(86) Internationale Anmeldenummer: PCT/EP2014/067255
(87) Internationale Veröffentlichungsnummer: WO 2015/032595

(56) Entgegenhaltungen:
- DE-A1-102005 050 963
- DE-A1-102011 076 426

## Beschreibung

Die Erfindung bezieht sich auf ein Aluminiumdruckgussteil und insbesondere ein tragendes Bauteil für ein Kraftfahrzeug, bei welchem zum Schutz gegen stoßartige Bruchlasten mindestens ein Zugelement aus einem duktil verformbaren Material und mit einem zum Gussteil unterschiedlichen Wärmeausdehnungskoeffizienten lastfest mit der lastäußeren Seite des Gussteils verklebt ist, nach dem Oberbegriff des Patentanspruchs 1.

Aus der DE 10 2011 076 426 A1 ist ein Aluminiumdruckgussteil dieser Art in Form einer Federstütze für ein Kraftfahrzeug bekannt, bei dem das Risiko eines Gussteilbruchs im Crashfall dadurch deutlich verringert wird, dass auf der lastäußeren Seite des Gussteils ein oder mehrere Zugbänder aus einem hochgradig zugfesten und zugleich duktil verformbaren Material mittels einer zähelastischen Verklebung durchgehend über die gesamte Zugbandlänge last- und insbesondere schubkraftübertragend befestigt sind. Auf diese Weise werden die auf das Gussteil einwirkenden Belastungsstöße von den Zugbändern auf der lastäußeren Seite soweit abgefangen, dass das Gussteil im Crashfall in erheblichem Umfang bruchfrei verformbar ist. Unter Betriebsbedingungen und vor allem unter der Einwirkung hoher Temperaturdifferenzen beim Aushärten des Klebstoffsystems kommt es aber wegen der materialbedingt unterschiedlichen Wärmeausdehnungskoeffizienten zu ungleichen Längenänderungen zwischen Gussteil und Zugbändern, die die bruchfreie Verformbarkeit des crashfallgesicherten Aluminiumdruckgussteils beeinträchtigen können.

Aufgabe der Erfindung ist es, ein Aluminiumdruckgussteil der eingangs genannten Art so auszubilden, dass die bruchfreie Verformbarkeit des Gussteils auch nach stärkeren Temperaturschwankungen, wie sie unter extremen Betriebsbedingungen oder beim Warmhärten des Klebstoffsystems auftreten können, unverändert erhalten bleibt.

Diese Aufgabe wird erfindungsgemäß durch das im Patentanspruch 1 gekennzeichnete Aluminiumdruckgussteil gelöst.

Erfindungsgemäß werden das Zugelement und das Gussteil in einzelne, an voneinander beabstandeten Fixpunkten jeweils schubfest miteinander verbundene Teilabschnitte unterteilt, an denen den jeweiligen Wärmedehnungsunterschieden zwischen Zugelement und Gussteil über einen weiten Temperaturbereich entgegengewirkt wird und somit die sich ergebenden Schubspannungen in der Klebstoffschicht innerhalb der zulässigen Grenzwerte gehalten werden. Auf diese Weise werden thermisch bedingte Delaminationserscheinungen oder Rissbildungen im Inneren der Verklebung mit geringem Fertigungsaufwand wirksam unterbunden, so dass das Gussteil auch nach Einwirkung stärkerer Temperaturschwankungen, die z. B. beim Warmhärten des Klebers bis zu 200° C betragen können, seine volle Funktionsfähigkeit beibehält.

In besonders bevorzugter Ausgestaltung der Erfindung sind das Aluminiumgussteil und das Zugelement aus Gründen einer vereinfachten Herstellung an den gegenseitigen Verbindungspunkten miteinander verschweißt oder in Schubrichtung formschlussgesichert.

Als für das Zugelement besonders günstiges Material hat sich in ausgiebigen Versuchen ein Mehrphasenstahl, insbesondere vom Typ HC 600, erwiesen, welcher zweckmäßigerweise mit einem Gussteil aus einer AlSi-Legierung kombiniert wird.

Die Erfindung wird nunmehr an anhand mehrerer Ausführungsbeispiele in Verbindung mit den Figuren näher beschrieben. Es zeigen in stark schematisierter Darstellung:
- **Fig. 1a,**: **b** ein erfindungsgemäß ausgebildetes Aluminiumdruckgussteil in Form einer Kraftfahrzeug-Federstütze im Schnitt (a) und in der Vorderansicht (b); und
- **Fig. 2a, b, c**: eine vergrößerte Teildarstellung des in Fig. 1 gezeigten Aluminiumdruckgussteils mit unterschiedlich gestalteten, schubfesten Verbindungsstellen jeweils in Form einer Niet- oder Bolzen- (a), einer Formschluss- (b) oder einer Schweißverbindung (c).

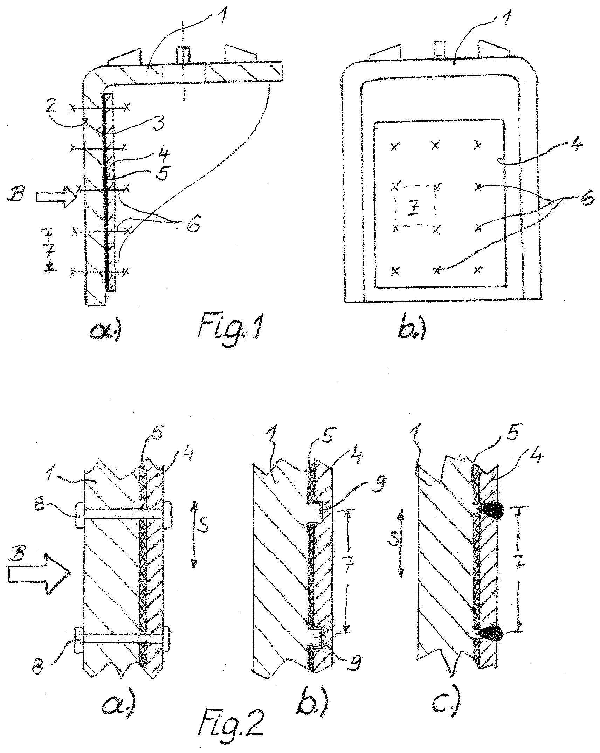

Das in Fig. 1 in Form eines quaderförmigen Trägers dargestellte Aluminiumdruckgussteil 1 besteht aus einer AlSi-Legierung und ist auf seiner der im Crashfall belasteten Seite 2 gegenüberliegenden Außenseite 3 mit einem oder mehreren, hochgradig zugfesten Zugelementen 4 aus einem duktilen Mehrphasenstahlblech vom Typ HC 600 mit einem zum Gussteil 1 unterschiedlichen Wärmeausdehnungskoeffizienten belegt, welches mit dem Gussteil 1 über eine zähelastische Verklebung 5, z. B. aus einem Strukturkleber, vollflächig lastfest verbunden ist.

Während ein herkömmlicher Aluminiumdruckgussträger eine hohe Materialsprödigkeit besitzt und daher unter der Wirkung eines punktuell angreifenden Belastungsstoßes B schon nach einer begrenzten Biegeverformung zu Bruch gehen kann, wird das Crashverhalten des Aluminiumgussteils 1 im Zusammenwirken mit dem aufgeklebten Zugelement 4 soweit verbessert, dass es sich bis zu einem sehr hohen Verformungsgrad riss- und bruchfrei verbiegen lässt.

Unter dem Einfluss von Temperaturschwankungen, wie sie etwa unter witterungsmäßig veränderten Betriebsbedingungen oder beim Härtungsprozess des Klebstoffsystems in der Abkühlphase auftreten, kommt es jedoch aufgrund der materialbedingt differierenden Wärmeausdehnungskoeffizienten zu unterschiedlichen Wärmedehnungen zwischen Gussteil 1 und Zugelement 4, die so groß sein können, dass die daraus resultierende Schubspannung in der Verklebung 5 über dem zulässigen Grenzwert liegt.

Dies wird dadurch verhindert, dass das Gussteil 1 und das Zugelement 4 durch diese schubsteif miteinander verbindende Fixpunkte 6 gleichförmig in einzelne Teilabschnitte 7 unterteilt sind. Durch die schubsteifen Verbindungspunkte 6 wird den zwischen Gussteil 1 und Zugelement 4 in dem jeweiligen Teilabschnitt 7 entstehenden Wärmedehnungsunterschieden entgegengewirkt und dadurch die Verklebung 5 von unzulässig hohen Schubspannungen freigehalten und auf diese Weise sichergestellt, dass Delaminationserscheinungen und/oder Rissbildungen im Inneren der Verklebung 5 unter der Einwirkung äußerer Temperaturdifferenzen wirksam unterbunden werden, so dass das derart gestaltete Gussteil 1 im Crashfall voll funktionsfähig bleibt.

Fig. 2 zeigt mehrere Ausführungsmöglichkeiten zur Ausbildung der schubsteifen Verbindungsstellen 6. So sind das Gussteil 1 und das Zugelement 4 nach Fig. 2a durch Niet-oder Bolzenverbindungen 8 miteinander verkoppelt und nach Fig. 2b bestehen die Verbindungsstellen 6 aus in Schubrichtung S wirksamen Formschlussverbindungen 9, während nach Fig. 2c im Abstand der Verbindungsstellen 6 Punktschweißverbindungen 10 vorgesehen sind.

## Patentansprüche

1. Aluminiumdruckgussteil, insbesondere tragendes Bauteil für ein Kraftfahrzeug, bei welchem zum Schutz gegen stoßartige Bruchlasten mindestens ein Zugelement (4) aus einem duktil verformbaren Material und mit einem zum Gussteil (1) unterschiedlichen Wärmeausdehnungskoeffizienten lastfest mit der lastäußeren Seite (3) des Gussteils verklebt ist, **dadurch gekennzeichnet, dass**
das Zugelement (4) und das Gussteil (1) an mehreren, über die Verklebung (5) verteilten Stellen (6) punktuell schubsteif miteinander verbunden sind.

2. Aluminiumdruckgussteil nach Anspruch 1, **dadurch gekennzeichnet, dass** das Gussteil (1) und das mit diesem zuvor verklebte Zugelement (4) punktförmig miteinander verschweißt sind.

3. Aluminiumdruckgussteil nach Anspruch 1, **dadurch gekennzeichnet, dass** das Gussteil (1) und das Zugelement (4) über voneinander beabstandete Formschlussstellen (9) schubsteif miteinander verkoppelt sind.

4. Aluminiumdruckgussteil nach einem der vorhergehenden Ansprüche, **dadurch gekennzeichnet, dass**
das Zugelement (4) aus einem Mehrphasenstahl, insbesondere vom Typ HC 600 besteht.

5. Aluminiumdruckgussteil nach einem der vorhergehenden Ansprüche, **dadurch gekennzeichnet, dass**
das Gussteil (1) aus einer AlSi-Legierung besteht.

## Claims

1. An aluminium die-casting, especially a supporting component for a motor vehicle, in which in order to protect against sudden breaking loads at least one tension element (4) made from a material which can undergo ductile deformation and with a coefficient of thermal expansion different from that of the casting (1) is adhesively bonded in load-resistant manner to that side (3) of the casting which is external to the load, **characterised in that**
the tension element (4) and the casting (1) are joined together in a shear-resistant manner in places at a plurality of points (6) distributed over the adhesive bond (5).

2. An aluminium die-casting according to Claim 1, **characterised in that** the casting (1) and the tension element (4) which has been adhesively bonded thereto beforehand are spot-welded together.

3. An aluminium die-casting according to Claim 1, **characterised in that** the casting (1) and the tension element (4) are coupled together in a shear-resistant manner via spaced-apart positive-fit points (9).

4. An aluminium die-casting according to one of the preceding claims, **characterised in that**
the tension element (4) comprises a multiphase steel, especially the type HC 600.

5. An aluminium die-casting according to one of the preceding claims, **characterised in that**
the casting (1) comprising an AlSi alloy.

## Revendications

1. Pièce en aluminium coulée sous pression, en particulier, composant porteur d'un véhicule, dans laquelle, pour permettre une protection contre des charges de rupture par à coups, au moins un élément de traction (4) réalisé en un matériau déformable ductile et ayant un coefficient de dilatation thermique différent de celui de la pièce de coulée (1) est collé de façon résistante à la charge sur la face (3) de la pièce de coulée située à l'extérieur de la charge,
**caractérisée en ce que**
l'élément de traction (4) et la pièce coulée (1) sont reliées ponctuellement de façon à résister au cisaillement en plusieurs endroits (6) répartis sur la liaison adhésive (5).

2. Pièce coulée sous pression en aluminium conforme à la revendication 1,
**caractérisée en ce que**
la pièce coulée (1) et l'élément de traction (4) préalablement collé à celle-ci sont soudés ponctuellement.

3. Pièce coulée sous pression en aluminium conforme à la revendication 1,
**caractérisée en ce que**
la pièce coulée (1) et l'élément de traction (4) sont accouplées de façon à résister au cisaillement en des emplacements de liaison par la forme (9) situés à distance les uns des autres.

4. Pièce coulée sous pression en aluminium conforme à l'une des revendications précédentes,
**caractérisée en ce que**
l'élément de traction (4) est réalisé en acier multiphasé, en particulier du type HC 600.

5. Pièce coulée sous pression en aluminium conforme à l'une des revendications précédentes,
**caractérisée en ce que**
la pièce coulée (1) est réalisée en un alliage AlSi.
